# EUROPEAN PATENT SPECIFICATION

(11) **EP 0 753 375 B1**
(45) Date of publication and mention of the grant of the patent: **10.01.2001**
(21) Application number: 96304929.1
(22) Date of filing: 03.07.1996
(51) Int. Cl.: B23K 35/32, B23K 35/02, E21B 10/50, C22C 29/06

(54) **Hardfacing material for rolling cutter drill bits**
Hartauftragwerkstoff für Rollenbohrmeissel
Matériau de rechargement dur pour trépans à molettes

(30) Priority: 03.07.1995 US 851
(43) Date of publication of application: 15.01.1997
(73) Proprietor: CAMCO INTERNATIONAL INC., Houston, Texas 77054 (US)
(72) Inventor: Smith, Randolph Carl, Houston, Texas 77088 (US)
(74) Representative: Carter, Gerald

(56) References cited:
- EP-A- 0 246 596
- EP-A- 0 323 090
- DE-A- 3 743 167
- FR-A- 2 590 192
- US-A- 3 023 130
- US-A- 3 252 828
- US-A- 4 726 432

## Description

This invention relates to heat treatable hardfacings, especially as applied to steel tooth rolling cutter earth drilling bits.

Hardmetal overlays are employed in rock drilling bits as wear and deformation resistant cutting edges and faying surfaces. These typically comprise composite structures of hard particles in a metal matrix. The hard particles may be metal carbides, such as cast WC/W2C eutectic, monocrystalline WC, or themselves comprise a finer cemented carbide composite material such as sintered WC-Cobalt. These hardmetal overlays are formed by braze or weld deposition of composite rod, wherein the typically iron based alloy matrix solidifies from a melt containing hard particles which remain at least partially solid. This type of rod has been in use for several decades. Early examples of hardfacing rods for welding are shown in U.S. Patents 1,757,601 and 3,023,130.

Steel tooth rolling cutter drill bits subject the hardfacing layer to extreme loads and prolonged scraping action. Therefore, the strongest, most wear resistant of fused hardmetals are used in rolling cutter drill bit cutting structures. These drill bits typically utilize sintered WC-Cobalt as the primary hard phase, and the hardfacing system is designed to maximize the size and volume fraction of hard phase. Often, a combination of hard particle types is incorporated in the materials design, and particle size distribution is manipulated to attain desired performance under rock drilling conditions, as disclosed in US patents Nos. 3,800,891; 4,726,432; and 4,836,307. These materials are usually incorporated into a composite rod and weld deposited on critical wear portions of the drill bit teeth.

The formulation of composite rod filler material entails fabricability and processing considerations in addition to constituency selection. Typically, a tubular construction has been employed, wherein a sheath of metal, usually low carbon steel, enfolds a particulate mixture comprising hard particle phases and additives including binders and deoxidizers. Sheath metal combines with substrate melt, if any, to provide substantially all of the matrix phase of the final deposit. Because the sheath supplies between 80% and 99% of the matrix phase, the sheath thickness is 0.38mm to 0.51mm (0.015" to 0.020") for 3.18mm to 6.35mm (1/8" to 1/4") nominal diameter composite rod. The final constituency of the hardmetal composite overlay is dependent on deposition process parameters as well as on raw material formulation.

The management of thermal inputs during hardfacing weld deposition is critical to the achievement of a sound deposit. Insufficient substrate heating or too cool composite rod melt can cause poor bonding, porosity, and irregular deposit configuration. Excess substrate heating, too high rod melt, and/or excess time at temperature produces substrate dilution and hard particle degradation. Substrate dilution reduces carbide fractions, effectively reducing the volume percentage of hardmetal present. Substrate dilutions in excess of 15% are common in these hardfacings. The effects of sintered particle degradation include particle softening and matrix embrittlement.

These effects lead to reduced wear resistance of the hardfacing and reduced ability of the hardfacing to withstand shock loads without fracture.

Deposit temperature/time control becomes increasingly critical with increases in carbide loading and large application surface areas. Composite rod with over about 60 wt% carbide fill becomes problematic to weld-deposit without substrate penetration/dilution in drill bits of medium to large sizes. Deposition dynamics are strongly influenced by the thermal transfer, melting, and flow characteristics of the thick metal sheath.

One solution to this limitation is to incorporate the metal matrix component(s) of composite rod as a powder instead of a solid sheath. This approach exploits the high specific surface area of particulate material to speed melting/wetting dynamics but entails loss of the sheath as a source of structural strength in handling and loss of melt progression regulation at high temperature.

U.S. patent No. 5,051,112 provides for use of sintering of a powder composite rod as a means of replacing the mechanical strength of the sheath. The sintered rod of this patent imposes a strong, porous, insulating structure which has to melt before collapsing into the weld pool. Melt progression can be difficult to control with a sintered rod, often resulting in a considerable variation of the thickness and composition of the hardfacing layer.

Another approach is disclosed in U.S. patent No. 4,699,848; which entails incorporation of a central core wire in lieu of a sheath. The wire reinforced rod of this patent places the hard to melt solid metal core at the centre of the rod, the furthest place from the heat source. The result is also relatively high temperatures at the surface of the composite rod and difficulty in controlling melt progression.

Both of these approaches provide some improvement over conventional, thick sheath tubemetal, but still sacrifice melting speed and control of melt progression. The high temperatures and long times required to melt these rods may still lead to carbide degradation and matrix embrittlement. In addition, these methods require costly additional processing steps or formulation additives to make them workable.

EP-A-0246596 also discloses a composite wire suitable for producing a hardfacing. The wire comprises a core structure obtained by forming a mixture of refractory metal carbide powder, cobalt powder and metallic powder suitable for forming the matrix phase of the hard facing. The core is surrounded by a metallic sheath.

EP-A-0323090 discloses a composite rod suitable for producing a hardfacing which consists of a steel tube with a filler. A typical composition of the filler is monotungsten carbide powder, cemented tungsten carbide powder, a de-oxidiser powder suitable for forming the matrix phase of the hard facing and an organic binder.

DE 37 43 167 A also discloses a rod suitable for producing a hardfacing and comprising a sheath of a cobalt or nickel alloy and a core. The core comprises nickel or cobalt, other metallic powders for forming the matrix of the hard facing, and refractory metal carbides.

In all of the three last-mentioned disclosures, the outer sheath of the composite rod or wire is thick and provides the majority of the matrix material for the hardfacing. Thus, in EP-A-0246596 the ratio of the weight of the metallic matrix powders to the sheath is less than 1 and in EP-A-0323090 the ratio is about 0.1. By contrast, according to the present invention only a thin surrounding sheath is provided, so that the ratio by weight of the metallic matrix powders in the composite material to the sheath exceeds 2.5.

An additional requirement of hardfacing applicable to steel tooth drill bits is that it be heat treatable to obtain the desired strength and toughness characteristics. The high stresses on the teeth of a steel tooth drill bit cutter in operation require that the entire outer surface of the rolling cutter be carburized, hardened and then tempered. A typical result is a hardness of 50 to 57 Rc to a depth of 1.52mm (.060") or more, which is most of the depth (thickness) of the hardmetal overlay.

The hardmetal layer is usually applied to the steel teeth of the cutter prior to the carburization to avoid cracking the rolling cutter body during welding. Because it is desirable to form a compressively stressed layer over the hardened tooth core, hardmetal and matrix material are carburized and hardened along with the rest of the surface of the cutter.

A common mode of hardfacing degradation in drilling service with the prior art steel tooth bits is known as "spalling" or "chipping". Spalling is characterized by loss of relatively large pieces of the hardfacing layer. Spalling entails crack propagation through the hardfacing caused by mechanical stresses from applied drilling loads. The drilling industry has learned to accept and tolerate hardfacing spalling failure as one of the limitations of steel tooth drill bits. With the advent of bits containing ever higher volume fraction tungsten carbide in their hardmetal layers, as shown in U.S. patent numbers 4,836,307 and 4,944,774, spalling becomes even more pronounced.

In drill bits made in accordance with the above listed patents and in other modern steel tooth drill bits prior to the present invention, the composition and performance of the matrix of the hardfacings has been a secondary design consideration. The typical drill bit hardfacing matrix consists of a carburized iron, deoxidizing elements, tungsten and carbon from melted hard particles, and elements from the substrate steel of the cutter.

Since existing drill bit hardfacing materials have many variables affecting the application of the hardfacing layer, there is a great deal of local variation in application temperatures, hardfacing thickness and matrix composition. These variations cause uncontrolled and undesirable alloying of the matrix metal. The act of carburizing and hardening the hardfacing matrix material coupled with these variations often adversely affects local hardness and toughness of the matrix material, leading to matrix failure, spalling and premature tooth wear during bit operation.

The present invention provides a new hardfacing material to produce a drill bit with a more durable hardfacing.

According to the invention there is provided a filler rod for hardfacing comprising a metallic sheath and a core, the core comprising refractory metal carbide powder, cobalt powder and further metallic powders suitable for forming the matrix phase of the hardfacing, characterised in that the ratio by weight of said further metallic powders to said sheath exceeds 2.5.

The present invention provides for a rapidly melting, highly controllable composite rod through the use of a thin metal sheath and a powder metal core comprising hard particles and a substantial portion of the metal matrix. Applied by the oxy-fuel welding process, it allows the rapid deposition of high carbide fraction, low porosity, hardmetal overlays on large substrates, with minimal carbide degradation and with typically less than 5% substrate dilution.

The thin sheath material allows rapid melting of both sheath and metal powders with minimal heat input, and yet provides excellent control of melt progression. The iron and alloy content of the powdered core is adjusted as sheath thickness is varied. The thin sheath thicknesses may vary from 0.025mm to .25mm (.001" to .010") although the preferred range is from .025mm to .15mm (.001" to .006") thickness.

The metallic matrix powders preferably include iron, deoxidisers and alloy powders, and said refractory metal carbide preferably includes carbides of at least one of the elements W, Mo, Cr, Ta, Nb and V.

The core is produced by combining the powdered metal with a plastic binder material and extruding under pressure followed by desiccation.. The core is then wrapped in a thin sheath.

Preferably the core structure includes an organic binder, such as methyl cellulose. The significant differences of constituent densities in existing art tubemetals can lead to segregation, resulting in weld deposit inhomogeneity which develops during the handling and metering of dry powder mixtures of "thick sheath" products. In the present invention, the organic binder does not allow particulate segregation during sheathing.

Careful selection of sheath thickness, compressed powder constituency ratios, matrix alloying powder additions and rod cross sectional area are necessary to assure the proper chemistry of the final hardfacing layer.

The following is a detailed description of embodiments of the invention, reference being made to the accompanying drawings in which:
Figure 1 is a perspective view of a steel tooth drill bit;
Figure 2 is a cross section view of a tooth of a steel tooth drill bit with the hardfacing produced by the material of the current invention; and
Figure 3 is a perspective view of the hardfacing material of the present invention.

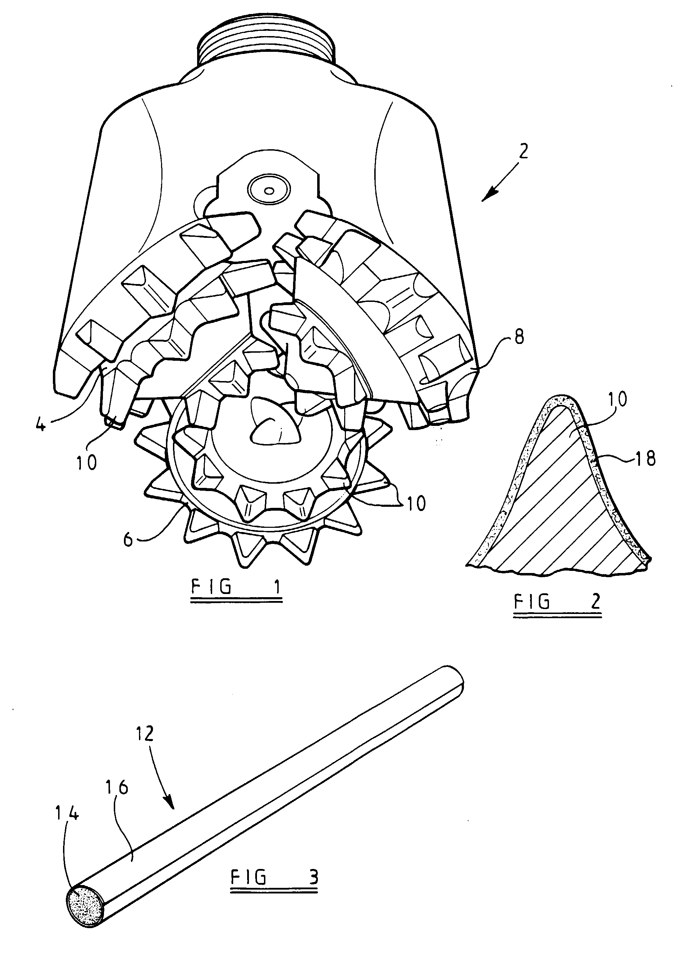

A perspective view of a steel tooth drill bit 2 is shown in figure 1. A steel tooth drill bit 2 typically has three rolling cutters 4, 6, 8 with a plurality of cutting teeth 10. Shown in figure 2 is a cross section view of a tooth of a steel tooth drill bit with the hardfacing produced by the material of the current invention. The tooth 10 is coated with a weld applied layer of hardfacing material 18 which contains hard particles and a continuous iron alloy matrix. The hardfacing layer 18 greatly improves the abrasion resistance of the steel teeth 10 and must survive the impact and scraping loads applied during rock drilling.

Referring now to figure 3, thin sheathed extruded rod 12 (TSER) is an extruded core 14 of cemented carbide, macrocrystalline carbide, and cast carbide, iron powder, powdered alloys, and deoxidizer with an organic binder. Since the metallic powders in the mixture adhere to the binder, powder segregation during handling is all but eliminated.

The mixture is compressed and covered with a thin 0.025mm to 0.25mm (0.001" to 0.010") sheath wrap 16. This sheath thickness range causes a ratio by weight of the metallic matrix powders (iron, deoxidizers and alloys) in the core, to the sheath, of greater than 2.5. In the preferred embodiment, the sheath 16 is from 0.050mm to 0.15mm (0.002" to 0.006") thick to optimize chemistry and melting characteristics. Silicates of potassium, sodium, or combinations thereof may be used to enhance the sheath adherence on the extruded core 14.

The preferred fabrication method for the TSER rod 12 employs shear mixing the metal powders with a methylcellulose plastic binder. The powdered metal with a methylcellulose/water bound mixture is then extruded directly into a sheathing mill, where it is wrapped, cut to length and subsequently desiccated. Alternatively, the extrudate 14 may be cut to length, desiccated and sheathed in the dry state. When the product is applied to steel parts for abrasion protection by the oxy-fuel welding process, the powders and thin sheath 16 fuse rapidly to produce a relatively solute free matrix supporting minimally heat degraded carbide particles. Application control via rod stiffness is provided continuously by the thin sheath 16.

In the preferred embodiment, the core fill consists of 50.8 wt%, 20/30 mesh crushed sintered WC/Co; 8.3 wt%, 40/100 mesh macrocrystalline WC; 4.4 wt%, 40/100 mesh cast WC; 31.3 wt%, 325 mesh iron powder; 2.0 wt% stabilized electrolytic Manganese powder which is both a deoxidizer and an alloying element; 2.0 wt% silico-manganese powder which is an additional deoxidizer; and 1.2 wt% methylcellulose based binder/extrusion agent. After thorough blending and extrusion into 5mm (.20") diameter x 711mm (28") long rods, the material is longitudinally wrapped with and bonded to a very thin (.002") AISI 1008 annealed low carbon steel foil sheath 16. This sheath thickness range causes a ratio by weight of the metallic matrix powders (iron, deoxidizers and alloys) in the core, to the sheath, of greater than 5. The plastic binder helps to maintain uniform distribution of constituents during manufacture, handling and application.

By the use of different alloying agents in the metal powder, many different types of steels may be used as a sheath 16 material. However, low carbon steels have been found particularly effective. TSER 12 is designed to be applied to steel substrates, typically the surfaces of drill bit teeth, by oxy-fuel welding (OFW). When oxygen-acetylene is utilized, flame temperature and reducing characteristics are established through various gas flows with a slightly oxygen reducing (excess acetylene) flame adjustment. Oxygen consumption and application rates vary directly with tooth surface area and have been evaluated for 20mm² (1/32 sq. in.) to 2580mm² (4 sq. in.) surfaces, with oxygen flows varying from 11 to 40 CFH, respectively. Application rates varying from 0.27 to 0.59 Kg/hr (.6 to 1.3 lbs/hr.) have been observed when applying the preferred embodiment, depending upon fuel flows and tooth geometry constraints. The ability to produce high quality deposits at such rates on such a range of substrates is very problematic using the prior art. The preferred embodiment results in deposits wherein average thickness may be varied from approximately 1.5mm to 5mm (0.06" to 0.20") and higher.

The drill bit cutters are carburized, hardened and tempered after weld application of the hardfacing 18. The heat-treated hardfacing 18 deposits exhibit well-preserved cemented tungsten carbide particles as a primary constituent, which retain 90% or more of their original hardness, with monocrystalline and cast WC/WC as secondary phases. Total deposit carbide volume fractions of about 57% are typical, with porosity volume fractions less than 1%. The fraction of the sintered tungsten carbide particles in the deposit with greater than or equal to 90% hardness retention is greater than 84% even on large substrates, and often exceeds 94%. Tungsten carbide particle distribution is uniform, allowing hardfacing optimizations via site and shape control.

The continuous iron alloy matrix exhibits the necessary hardness, approximately 800 DPH, and toughness levels (for drill bit service) through Cr-Ni-Mn-Si alloying powders contained within the extruded TSER core 14. Tailoring of matrix properties by core powder additions or sheath alloy modifications is straightforward. These property and application advantages result from the minimization of the time that the materials spend in the high temperature, molten state between rod 12 and deposit. This is a direct advantage of using a powdered (but not sintered) core 14 with a very thin sheath 16, and OFW application, which does not gouge the substrate and provides well controlled deposition and cooling.

Using the TSER 12 hardfacing material a steel tooth drill bit cutter after heat treatment has a hardfacing 18 with primary sintered cemented carbide particles in a continuous iron alloy matrix. The matrix has less than 5% substrate dilution and a composition by weight of from .1% to 3% Chromium, .1% to 2.5% Nickel, .1% to 1.5% Molybdenum, .5% to 9% Manganese, .3% to 2% Silicon, .4% to 1.3% Carbon, unavoidable impurities and Iron.

The volume percent of the cemented carbide primary particles exhibiting 90 percent or more of their original hardness is at least 85 percent. These carbide primary particles can be comprised of one or more carbides of the elements W, Mo, Cr, Ta, Nb, and V. The matrix alloy provides for a hardfacing matrix which has greatly increased toughness, and the high hardness retention of the primary carbides provides for greater wear resistance compared to prior art steel tooth drill bits.

Furthermore, a steel tooth drill bit cutter made with the preferred embodiment of the TSER material 12 has a hardfacing 18 comprising primary sintered cemented tungsten carbide particles and a matrix alloy; a carburized surface layer of said hardfacing having an iron matrix alloy composition by weight of from .1% to 1% Chromium, .1% to 2.0% Nickel, .1% to .75% Molybdenum, 1.5% to 7% Manganese, .7% to 1.5% Silicon, .7% to .9% Carbon, unavoidable impurities and iron, wherein the volume percent of said cemented carbide primary particles exhibiting 90 percent or more of their original hardness is at least 85 percent.

Because a drill bit made with the TSER hardfacing rod 12 of the present invention has a more consistent layer thickness compared with prior art steel tooth drill bits and typically less than 5% substrate dilution, the benefits of alloying the hardfacing 18 are synergistically increased.

## Claims

1. A filler rod for hardfacing comprising a metallic sheath (16) and a core (14), the core comprising refractory metal carbide powder, cobalt powder and further metallic powders suitable for forming hte matrix phase of the hardfacing, characterised in that the ratio by weight of said further metallic powders to said sheath exceeds 2.5.

2. A filler rod according to Claim 1, wherein the ratio by weight of said metallic matrix powders to said sheath exceeds 5.

3. A filler rod according to Claim 1 or Claim 2, wherein said sheath has a thickness of from .025mm to .25mm (.001" to .010").

4. A filler rod according to Claim 3, wherein said sheath has a thickness of from .025mm to .15mm (.001" to .006").

5. A filler rod according to any of the preceding claims, wherein said metallic matrix powders include iron, deoxidisers and alloy powders.

6. A filler rod according to any of the preceding claims, wherein said refractory metal carbide includes carbides of at least one of the elements W, Mo, Cr, Ta, Nb and V.

7. A filler rod according to Claim 6, wherein said refractory metal carbide is tungsten carbide.

8. A filler rod according to any of the preceding claims, wherein the core structure includes an organic binder.

9. A filler rod according to Claim 8, wherein the organic binder is methyl cellulose.

10. A filler rod according to any of the preceding claims, wherein the core structure is produced by extrusion and desiccation.

## Patentansprüche

1. Schweißstab zum Hartauftragsschweißen, der eine Metallhülle (16) und einen Kern (14) umfaßt, wobei der Kern feuerfestes Metallkarbidpulver, Kobaltpulver und weitere Metallpulver aufweist, die für die Bildung der Matrixphase des Hartauftragschweißens geeignet sind, dadurch gekennzeichnet, daß das Gewichtsverhältnis der weiteren Metallpulver zur Hülle 2,5 übersteigt.

2. Schweißstab nach Anspruch 1, bei dem das Gewichtsverhältnis der Matrixmetallpulver zur Hülle 5 übersteigt.

3. Schweißstab nach Anspruch 1 oder Anspruch 2, bei dem die Hülle eine Stärke von 0,025 mm bis 0,25 mm (0,001 Zoll bis 0,010 Zoll) hat.

4. Schweißstab nach Anspruch 3, bei dem die Hülle eine Stärke von 0,025 mm bis 0,15 mm (0,001 Zoll bis 0,006 Zoll) hat.

5. Schweißstab nach einem der vorhergehenden Ansprüche, bei dem die Matrixmetallpulver Eisen, Deoxidatoren und Legierungspulver einschließen.

6. Schweißstab nach einem der vorhergehenden Ansprüche, bei dem das feuerfeste Metallkarbid Karbide von wenigstens einem der Elemente W, Mo, Cr, Ta, Nb und V einschließt.

7. Schweißstab nach Anspruch 6, bei dem das feuerfeste Metallkarbid Wolframkarbid ist.

8. Schweißstab nach einem der vorhergehenden Ansprüche, bei dem die Kernstruktur ein organisches Bindemittel einschließt.

9. Schweißstab nach Anspruch 8, bei dem das organische Bindemittel Methylcellulose ist.

10. Schweißstab nach einem der vorhergehenden Ansprüche, bei dem die Kernstruktur durch Strangpressen und Trocknen hergestellt wird.

## Revendications

1. Baguette d'apport pour rechargement, comprenant une gaine métallique (16) et un noyau (14), le noyau comprenant de la poudre de carbure métallique réfractaire, de la poudre de cobalt et d'autres poudres métalliques appropriées pour former la phase matrice du rechargement, caractérisée en ce que le rapport en poids entre lesdites autres poudres métalliques et ladite gaine est supérieur à 2,5.

2. Baguette d'apport selon la revendication 1, dans laquelle le rapport en poids entre lesdites poudres métalliques de matrice et ladite gaine est supérieur à 5.

3. Baguette d'apport selon les revendications 1 ou 2, dans laquelle ladite gaine a une épaisseur comprise entre 0,025 mm et 0,25 mm (0,001" et 0,010").

4. Baguette d'apport selon la revendication 3, dans laquelle ladite gaine a une épaisseur comprise entre 0,025 mm et 0,15 mm (0,001" à 0,006").

5. Baguette d'apport selon l'une quelconque des revendications précédentes, dans laquelle lesdites poudres métalliques de matrice englobent du fer, des désoxydants et des poudres d'alliage.

6. Baguette d'apport selon l'une quelconque des revendications précédentes, dans laquelle ledit carbure métallique réfractaire englobe des carbures d'au moins une des éléments W, Mo, Cr, Ta, Nb et V.

7. Baguette d'apport selon la revendication 6, dans laquelle ledit carbure métallique réfractaire est du carbure de tungstène.

8. Baguette d'apport selon l'une quelconque des revendications précédentes, dans laquelle la structure de noyau englobe un liant organique.

9. Baguette d'apport selon la revendication 8, dans laquelle le liant organique est de la méthylcellulose.

10. Baguette d'apport selon l'une quelconque des revendications précédentes, dans laquelle la structure de noyau est produite par extrusion et dessiccation.
